# EUROPÄISCHE PATENTSCHRIFT

(11) **EP 1 522 437 B1**
(45) Veröffentlichungstag und Bekanntmachung des Hinweises auf die Patenterteilung: **27.12.2006**
(21) Anmeldenummer: 04021650.9
(22) Anmeldetag: 11.09.2004
(51) Int. Cl.: B60H 1/00

(54) **Luftversorgungseinrichtung zur Klimatisierung eines Fahrzeuginnenraums eines Fahrzeugs, insbesondere eines Nutzfahrzeuges**
Air supply unit for air-conditioning a passenger compartment of a vehicle, in particular of an utility vehicle
Dispositif d'alimentation en air pour climatiser l'habitacle d'un véhicule, en particulier d'un véhicule utilitaire

(30) Priorität: 08.10.2003 DE 10347308
(43) Veröffentlichungstag der Anmeldung: 13.04.2005
(73) Patentinhaber: Volkswagen AG, 38436 Wolfsburg (DE)
(72) Erfinder: Hustede, Rik, 38553 Wasbüttel (DE)
(74) Vertreter: Liebl, Thomas

(56) Entgegenhaltungen:
- EP-A- 0 962 342
- DE-A- 10 058 366
- US-A- 4 640 184

## Beschreibung

Die Erfindung betrifft eine Luftversorgungseinrichtung zur Klimatisierung eines Fahrzeuginnenraums eines Fahrzeuges, insbesondere eines Nutzfahrzeuges, nach dem Oberbegriff des Anspruchs 1.

Aus der gattungsbildenden US 6,062,635 ist bereits eine Luftversorgungseinrichtung zur Klimatisierung eines Kraftfahrzeuges mit einem in einem Fahrzeuginnenraum anordenbaren Dachhimmel bekannt, auf dessen dem Fahrzeugdach zugeordneter Dachhimmeloberseite wenigstens ein mit einer Belüftungsquelle koppelbarer Luftverteilerkanal angeordnet ist, der sich wenigstens über einen Teilbereich der Dachhimmeloberseite erstreckt und diese überdeckt. Im überdeckten Dachhimmeloberseitenbereich als Überdeckungsbereich ist wenigstens eine Luftausströmerdüse im Dachhimmel für einen Luftdurchtritt in den Fahrzeuginnenraum hinein vorgesehen.

Konkret ist hier ein eine U-Form aufweisender Luftverteilerkanal entlang eines fondseitigen hinteren Dachhimmelrandbereichs auf der Dachhimmeloberseite angeordnet. Dieser Luftverteilerkanal wird über eine seitliche hintere Vertikalsäule mit Luft beaufschlagt, um die Luft über den Luftverteilerkanal zu den einzelnen Ausströmdüsen, die in den Fahrzeuginnenraum hinein ausströmen, zu verteilen.

Weiter ist aus der DE 29 14 552 A1 der nächster Stand der Technik eine Luftversorgungseinrichtung in Verbindung mit einem Fahrzeug-Dachhimmel für einen Pkw bekannt, bei der in den Dachhimmel eine quer zur Fahrtrichtung verlaufende Vertiefung eingearbeitet ist. In diese Vertiefung wird von der Dachhimmeloberseite her ein Luftverteilerkanal eingesetzt, der durch sich entlang der rückwärtigen Säulen erstreckende Luftkanäle mit Luft versorgt wird. Im Dachhimmel sind im Bereich des Luftkanals entsprechende Ausströmöffnungen eingesetzt.

Eine Luftversorgungseinrichtung nach dem Oberbegriff des Anspruchs 1 ist auch aus der DE 100 58 366 A bekannt.

Aus der DE 42 37 344 A1 ist ein Dachhimmel für einen Pkw bekannt, der ein mehrschichtiges Verkleidungselement mit einer verformbaren mittleren Trägerschicht aus geschäumten Kunststoff umfasst, mit beidseitig der Trägerschicht angeordneten weiteren ebenfalls verformbaren Schichten und mit einer zum Fahrzeuginnenraum weisenden Dekorschicht. Auf der im Fahrzeuginnenraum abgewandten Seite des Dachhimmels ist ein mehrschichtiges Kammerelement mit einer verformbaren mittleren Trägerschicht aus geschäumten Kunststoff mit beidseitig der Trägerschicht angeordneten weiteren ebenfalls verformbaren Schichten angeordnet. Das Kammerelement ist an Flanschbereichen mit dem Dachhimmel verbunden und begrenzt gemeinsam mit dem Dachhimmel eine oder mehrere Luftkammern. Die Luftkammern münden in Luftöffnungen, die im Dachhimmel ausgespart sind.

Aus der DE 198 32 738 A1 ist ferner ein Dachhimmel für einen Pkw bekannt, der eine Luftverteilkammer aufweist, die mit einer sich in Richtung der Flächenausdehnung des Dachhimmels flächig erstreckenden Luftaustrittswand an den Fahrgastraum angrenzt. Diese Luftaustrittswand ist mit einer Vielzahl von fein verteilten Durchbrüchen perforiert, durch welche die der Luftverteilkammer von der Luftversorgungseinrichtung zugeführte Luft mit im Wesentlichen flächenhaft ausgedehnten Luftfronten in den Fahrgastraum eintritt. Die Luftzufuhr erfolgt dabei über die Hohlräume der C-Säule oder A-Säule.

Die oben angeführten Dachhimmelaufbauten und Luftversorgungseinrichtungen zur Belüftung und Klimatisierung eines Fahrzeuginnenraums sind allesamt für den Einsatz in Fahrzeugen, insbesondere Pkw's, Vans, mit hohem Ausstattungskomfort und hoher Ausstattungsqualität gedacht, die zudem auch einen optisch ansehnlichen Gesamteindruck vermitteln sollen. Deshalb sind die technischen Lösungen zur Erfüllung dieser Ansprüche insgesamt relativ aufwendig in Herstellung und Montage, z. B. durch die säulenseitige Luftzuführung zu den auf der Dachhimmeloberseite angeordneten Luftverteilerkanälen, was sich wiederum in den Kosten für diese Luftversorgungseinrichtungen niederschlägt. Für Einsatzfälle in Nutzfahrzeugen, wie z. B. Bussen, die beispielsweise als Transportfahrzeuge im rauen Handwerksbereich und/oder zum Personentransport eingesetzt werden, sind trotz des bestehenden Wunsches nach einer Klimatisierung des Fahrzeuginnenraums diese hochwertigen und anmutenden Luftversorgungseinrichtungen nicht erforderlich, da zu teuer und werden daher vom Kunden weniger nachgefragt.

Aufgabe der Erfindung ist es, eine Luftversorgungseinrichtung zur Klimatisierung eines Fahrzeuginnenraums eines Fahrzeugs, insbesondere eines Nutzfahrzeuges, zu entwickeln, mit der eine Innenraumbelüftung und -klimatisierung auf einfache, preiswerte und funktionssichere Art und Weise möglich ist und die ferner auch mit geringem Montageaufwand montierbar ist.

Diese Aufgabe wird gelöst mit den Merkmalen des Anspruchs 1.

Gemäß Anspruch 1 weist die Luftversorgungseinrichtung einen im Fahrzeuginnenraum verlaufenden Luftführungskanal auf, der sich im montierten Zustand mit einer Luftführungskanal-Längsseite entlang einer dem Fahrzeuginnenraum zugewandten Dachhimmelunterseite erstreckt. Dabei ist dieser sich längs entlang der Dachhimmelunterseite erstreckende Luftführungskanal einerseits mittelbar oder unmittelbar mit der Belüftungsquelle und andererseits mittels wenigstens einem Luftführungskanal-Anschlusselement mittelbar oder unmittelbar mit wenigstens einem Luftverteilerkanal auf der Dachhimmeloberseite gekoppelt.

Ein derartiger Aufbau einer Luftversorgungseinrichtung erlaubt eine besonders kostengünstige Lösung, insbesondere für Nutzfahrzeuge, die mit einem geringeren Innenausstattungskomfort ausgestattet werden sollen, da eine derartig aufgebaute Luftversorgungseinrichtung einfachst aufgebaut werden kann und damit auch schnell und kostengünstig im Fahrzeug montiert werden kann. D. h., dass bei dieser erfindungsgemäßen Lösung der Luftführungskanal vom Fahrzeuginnenraum aus sichtbar bleibt, so dass z. B. keine aufwendigen und damit kostenintensiven konstruktiven Lösungen erforderlich sind, um die Luftführung zu den Luftverteilerkanälen verdeckt zu gestalten.

Ausgehend von diesem erfindungsgemäßen Grundaufbau ergeben sich zudem zahlreiche Vorteile durch die bevorzugten Ausgestaltungen, die Gegenstand der Unteransprüche sind:

So kann das wenigstens eine Luftführungskanal-Anschlusselement durch entsprechende Anschlusselement-Aussparungsöffnungen im Dachhimmel vorzugsweise formschlüssig und/oder dicht hindurchgeführt und mit dem Luftverteilerkanal gekoppelt sein. Derartige Anschlusselement-Aussparungsöffnungen können im Dachhimmel beispielsweise auf einfache Weise durch Ausstanzen gebildet sein, z. B. in Verbindung mit einem Dachhimmel, der durch eine flexible plane Platte gebildet ist, z. B. einer Holzfaserplatte, die im Rahmen der Montage aufgrund ihrer Flexibilität einfach in die gewünschte Position gebogen werden kann.

Gemäß einer weiteren bevorzugten Ausgestaltung, die eine einfache und schnelle Montage des Belüftungssystems ermöglicht, kann der Luftführungskanal mittels wenigstens einer Schnellverbindung am Dachhimmel lösbar verrastet und/oder verriegelt werden. Beispielsweise können als Schnellverbindungen eine Rastverbindung und/oder eine Steckverbindung und/oder eine Schiebeverbindung vorgesehen sein. Eine besonders vorteilhafte, kostengünstige und funktionssichere Schnellverbindung stellt gemäß einer konkreten Ausführungsform die Anbindung des Luftführungskanals am Dachhimmel mittels wenigstens einer Steck- und Schiebeverbindung dar. Diese Steckund Schiebeverbindung ist vorzugsweise so ausgebildet, dass am Luftführungskanal zur Ausbildung der jeweiligen Steck- und Schiebeverbindung ein Bolzen vorgesehen ist, der einen Bolzensteg und einen demgegenüber breiteren Bolzenkopf aufweist, wobei der Bolzen mit dem Bolzenkopf durch eine dachhimmelseitige Bolzenaufnahme einer schlüssellochartigen Dachhimmelausnehmung, an die sich ein gegenüber dem Bolzenkopf schmaler und von den Abmessungen her in etwa an den Bolzensteg angepasster nutenförmiger Schlitzbereich anschließt, steckbar ist. Dadurch wird erreicht, dass anschließend der Bolzen mit seinem Bolzensteg vorzugsweise unter Herstellung eines Klemmschlusses und/oder eines Formschlusses von der Bolzenaufnahme ausgehend in den Schlitzbereich eingeschoben werden kann, so dass der Bolzenkopf in seiner Verschiebeendposition die Dachhimmelausnehmung im Schlitzbereich hintergreift. Im Rahmen der Montage braucht daher von dem Werker nur der Luftführungskanal angesetzt, eingesteckt und dann in die Endposition verschoben werden, um diesen am Dachhimmel festzulegen.

Zur Erhöhung der Funktionssicherheit dieser Steck- und Schiebeverbindung ist gemäß einer weiteren bevorzugten Ausführungsform vorgesehen, dass im Bereich des Bolzens ferner wenigstens eine Fixiernase ausgebildet ist. Diese ist nach einer Überführung des Bolzens in dessen Verschiebeendposition so in den Bereich der Dachhimmelausnehmung, vorzugsweise in den Bereich der Bolzenaufnahme, z. B. einschiebbar und/oder einschwenkbar ist, dass die Fixiernase im Zusammenwirken mit einem angrenzenden dachhimmelausnehmungsseitigen Gegenelement, das vorzugsweise durch einen Öffnungsrandbereich gebildet ist, ein Verschieben des Bolzens und damit des Luftführungskanales blockiert. Im Rahmen der Demontage kann eine derartige Verriegelung auf einfache Weise wieder durch z. B. Ausschwenken gelöst werden.

Grundsätzlich kann eine Steck- und Schiebeverbindung an einem Außenwandbereich des Luftführungskanals beabstandet von dem wenigstens einem Luftführungskanal-Anschlusselementes angeordnet sein. Eine vorteilhafte Funktionsintegration ergibt sich jedoch, wenn die Steck- und Schiebeverbindung an dem Luftführungskanal im Bereich des Luftführungskanal-Anschlusselementes ausgebildet ist.

Weiter kann der Luftführungskanal nach Herstellung der Schnellverbindung mit dem Dachhimmel zudem auch z. B. mittels wenigstens einer Fixierschraube am Dachhimmel noch fixiert werden. Diese Fixierschraube ist vorzugsweise im Bereich eines der Belüftungsquelle gegenüberliegenden freien Luftführungskanalendes vorgesehen. Auch damit kann die Funktionssicherheit im Rahmen der Befestigung des Luftführungskanals am Dachhimmel nochmals erheblich erhöht werden.

Insbesondere zur Abdichtung des Anschlusselement-Aussparungsöffnungsbereiches im Dachhimmel, aber auch zur Herstellung eines klapperfreien Aufbaus kann eine um das Luftführungskanal-Anschlusselement ringförmig herumgeführte Dichtung vorgesehen sein, die im montierten Zustand einerseits an einem dachhimmelunterseitigen Aussparungsöffnungsrandbereich und andererseits an einem entsprechend zugeordneten Luftführungskanalbereich, der vorzugsweise durch einen Außenwandbereich des Luftführungskanals gebildet ist, dicht verpresst anliegt.

Das wenigstens eine Luftführungskanal-Anschlusselement ist bevorzugst durch einen Anschlussstutzen ausgebildet, der vom Luftführungskanalseitenwandbereich wegragt. Als bevorzugte Geometrie kann z. B. ein rechteckförmiger Querschnitt vorgesehen sein.

Gemäß einer weiteren bevorzugten konkreten Ausgestaltung ist ein Luftführungskanal vorgesehen, der sich im Fahrzeuginnenraum an der Dachhimmelunterseite randseitig im dachholmnahen Bereich in Fahrzeuglängsrichtung erstreckt. Die Anordnung kann dabei bevorzugt im Fahrzeugfondbereich erfolgen. Mit einem derartigen seitlich im Fahrzeuginnenraum liegendem Luftführungskanal wird erreicht, dass die im Fahrzeuginnenraum vorhandene Ladehöhe und/oder der Kopffreiraum zwischen einem Fahrzeuginsassen und dem Dachhimmel durch den an der Dachhimmelunterseite verlaufenden Luftführungskanal nicht reduziert wird. Denn durch die seitliche Anordnung des Luftführungskanals ist sichergestellt, dass dieser außerhalb des diesbezüglich relevanten Bereiches verläuft.

Bevorzugt erstreckt sich dabei dieser im Fahrzeuginnenraum seitlich am Rand angeordnete Luftführungskanal bis in etwa in den Bereich einer Vertikalsäule und ist mittels einer dort angeordneten Belüftungsquelle, z. B. einem Gebläse gekoppelt. Gemäß einer konkreten Ausführungsform ist vorgesehen, dass sich der Luftführungskanal im Fahrzeugfondbereich eines Kombi- oder Nutzfahrzeuges bis in etwa zu einer D-Säule erstreckt und mit einer dort im Bereich der D-Säule angeordneten Gebläseeinrichtung gekoppelt ist. Gegebenenfalls kann hier in Abhängigkeit von einem Radstand der Luftführungskanal mittelbar mittels wenigstens einem sich entlang der Vertikalsäule und/oder aber auch noch einen Dachholmendbereich in Fahrzeuglängsrichtung erstreckenden Luftkanalelement mit der Belüftungsquelle gekoppelt sein. Dadurch wird ein einfach aufgebautes Belüftungssystem zur Klimatisierung eines Fahrgastraumes, insbesondere in einem Fondbereich eines Nutzfahrzeuges oder aber auch eines Kombifahrzeuges geschaffen. Dies insbesondere auch dann, wenn das die Belüftungsquelle mit dem Luftführungskanal verbindende Luftkanalelement an der Säule mittels wenigstens einer Rast- und/oder Schiebeund/oder Steckverbindung als Schnellverbindung verrastet wird. Beispielsweise können hier am Luftkanalelement Kunststoff-Ausformungen vorgesehen sein, die Ausnehmungen in der Säule hintergreifen. Ein derartiges Kunststoff-Luftkanalelement ist einfach und preisgünstig herstellbar und erlaubt somit eine einfache Montage und einen insgesamt funktionssicheren Aufbau.

Entsprechend einer konkreten Ausgestaltung erstreckt sich der auf der Dachhimmeloberseite angeordnete wenigstens eine Luftverteilerkanal über den Dachhimmel zwischen gegenüberliegenden Fahrzeugseiten in Fahrzeugquerrichtung, höchst bevorzugt in einem unverstärktem Fahrzeugdachbereich, d. h. beabstandet von den Dachspriegeln. Dadurch wird ein Dachhimmelaufbau möglich, der möglichst viel Ladehöhe und Kopffreiheit im Fahrzeuginnenraum ermöglicht. Zudem ergeben sich hier durch den Verlauf in Fahrzeugquerrichtung gute Ergebnisse im Hinblick auf eine gleichmäßige Fahrzeugklimatisierung in diesem Fahrzeugbereich. Besonders bevorzugt sind in einem Fondbereich auf der Dachhimmeloberseite wenigstens zwei Luftverteilerkanäle vorgesehen, die beabstandet voneinander und in etwa parallel zueinander ausgerichtet sind und in Fahrzeugquerrichtung zwischen gegenüberliegenden Fahrzeugseiten auf der Dachhimmeloberseite verlaufen. Jedem dieser separaten Luftverteilerkanäle ist mittels einem separaten Luftführungskanal-Anschlusselement mit dem Luftführungskanal strömungsverbunden. Hierdurch wird eine vorteilhafte Konstruktion geschaffen, die einfachst zu realisieren ist.

Der Luftverteilerkanal weist vorteilhaft im Querschnitt ein nach unten offenes U-förmiges Profil auf, vorzugsweise ein sogenanntes hutförmiges Profil mit Befestigungsflanschen an den freien Enden, so dass der überdeckte Dachhimmeloberseitenbereich Bestandteil der oberseitigen Luftführung ist. Ein derartiger Luftverteilerkanal kann auf einfache Weise schnell und funktionssicher durch Kleben und/oder Verschmelzen und/oder Tackern und/oder Schweißen mit der Dachhimmeloberseite verbunden werden.

Ein besonders preiswerter und gewichtsgünstiger Aufbau ergibt sich dann, wenn der wenigstens eine Luftverteilerkanal z. B. aus einem Kunststoffschaum, z. B. einem Polyethylen-Schaum hergestellt ist. Derartige Luftverteilerkanäle können vorteilhaft tiefgezogen werden. Neben den zuvor genannten Vorteilen weist ein derartiger Aufbau der Luftverteilerkanäle aber auch noch eine gute thermische Isolation gegen ein warmes Dach auf, hat eine sehr gute Flexibilität und gute akustische Eigenschaften. Insbesondere in Verbindung mit einem Dachhimmel, der als flexible, plane und vorzugsweise dimensionsstabile Platte, z. B. aus einem Holzfasermaterial hergestellt ist, ergibt sich hier somit ein preiswerter Aufbau, der zwar in Verbindung mit einer Fahrzeugklimatisierung nicht den höchsten Ansprüchen insbesondere im Hinblick auf Ausstattungskomfort und Innenraumdesign genügt, der aber auf zweckmäßige und funktionsgerichtete Art und Weise eine Fahrzeugklimatisierung auch in solchen Fahrgasträumen ermöglicht, wie sie z. B. in Verbindung mit Nutzfahrzeugen und/oder Kombifahrzeugen als Montagefahrzeugen Verwendung finden können. In eine derartige z. B. Holzfaserplatte können in entsprechende Ausstanzungen auch die Luftausströmer direkt eingeklippst werden, ohne aufwendige Befestigungstechnik. Dies wird durch den die Dachverkleidung bildenden Aufbau des Dachhimmels aus z. B. einem Holzfasermaterial erreicht. Dimensionsstabil bedeutet dabei, dass die Platte in vorgegebenen Biegebereichen ihre ursprüngliche Außenkontur beibehält.

Besonders preisgünstig ist ein Luftführungskanal sowie gegebenenfalls damit gekoppelte Luftkanalelemente als einstückiges Kunststoffblasteil herstellbar, die vorzugsweise zwecks der optischen Anmutung genarbt sein können. Als Kunststoff eignet sich hier insbesondere Polypropylen. Derartige hohle Luftführungen können somit einstückig ausgeführt werden, im Gegensatz zu Spritzgussteilen, bei denen ein Querschnitt in der Regel mindestens aus zwei Bauteilen zusammengesetzt werden muss. Durch die Ausführung als Blasformteile werden damit teure Aufbauten und auch Dichtigkeitsprobleme vermieden. Zudem können in Verbindung mit einem Blasformprozess auch die Befestigungselemente, wie z. B. die zuvor genannten Steckund Schiebeverbindungen als Schnellverbindungen auf einfache Weise integral ausgebildet werden. Insgesamt wird daher hier ein Aufbau erhalten, der auf einfache und preiswerte Weise eine Klimatisierung von Fahrgasträumen auch für weniger hochwertige Fahrzeuginnenraumausstattungen ermöglicht, wie dies z. B. für Fahrzeuge, insbesondere Nutzfahrzeuge im Dienstleistungsbereich (Lieferfahrzeuge, Busse, etc.) erforderlich ist.

Die Erfindung wird nachfolgend anhand einer Zeichnung näher erläutert.

Es zeigen:
- Fig. 1: eine schematische, perspektivische Darstellung einer erfindungsgemäßen Luftversorgungseinrichtung, wobei die Einzelteile in einer Explosionsdarstellung gezeigt sind,
- Fig. 2: eine schematische, perspektivische Darstellung der Luftversorgungseinrichtung im montierten Zustand,
- Fig. 3: eine schematische Schnittdarstellung durch einen Luftverteilerkanal,
- Fig. 4: eine schematische, perspektivische Darstellung eines Teilbereiches der Luftversorgungseinrichtung, wobei die Montage von Luftausströmerdüsen gezeigt ist,
- Fig. 5: eine schematische, perspektivische Darstellung eines Teilbereichs der Luftversorgungseinrichtung, wobei die Montage eines Luftkanalelements gezeigt ist,
- Fig. 6: eine schematische Schnittdarstellung durch das Luftkanalelement,
- Fig. 7: eine schematische Ansicht eines Teilbereichs der Luftversorgungseinrichtung, wobei ein erster Montageschritt zur Anbringung eines Luftführungskanals gezeigt ist,
- Fig.8: eine schematische Ansicht analog Fig. 7, wobei der zweite Montageschritt zur Anbringung des Luftführungskanals gezeigt ist,
- Fig. 9 und 10: schematische Detailansichten der Herstellung einer Steck- und Schiebeverbindung des Luftführungskanals an einem Dachhimmel,
- Fig. 11 eine: schematische Schnittdarstellung durch den Luftführungskanal im montierten Zustand im Bereich der Steck- und Schiebeverbindung,
- Fig. 12: eine schematische, perspektivische Detaildarstellung eines Luftführungskanal-Anschlusselements im montierten Zustand,
- Fig. 13: eine schematische Schnittdarstellung durch den Luftführungskanal im Bereich des Luftführungskanal-Anschlusselements im montierten Zustand, und
- Fig. 14: eine schematische Schnittdarstellung durch den Luftführungskanal im Bereich einer Fixierschraube.

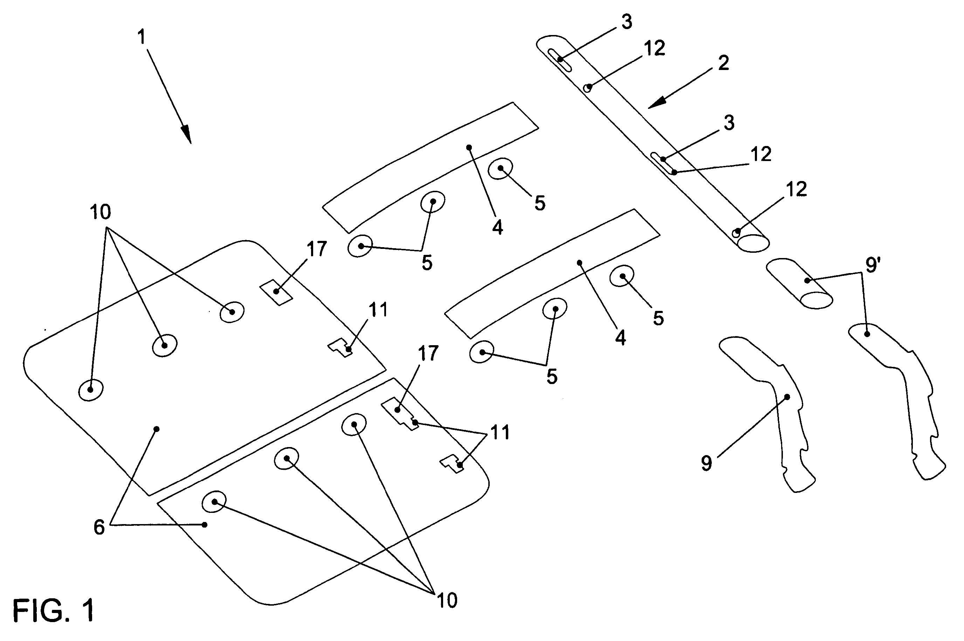

In Fig. 1 ist schematisch eine erfindungsgemäße Luftversorgungseinrichtung 1 in einer perspektivischen Darstellung gezeigt, wobei die Einzelteile der Luftversorgungseinrichtung 1 in einer Explosionsdarstellung angeordnet sind. Die Luftversorgungseinrichtung umfasst einen Luftführungskanal 2, der über als Anschlussstutzen ausgebildete Luftführungskanal-Anschlusselemente 3 mit Luftverteilerkanälen 4 gekoppelt werden kann. Den beiden Luftverteilerkanälen 4 sind Luftausströmerdüsen 5 zugeordnet, die im montierten Zustand der Luftversorgungseinrichtung 1 an einer Dachhimmelunterseite eines Dachhimmels 6 einem Fahrzeuginnenraum 7 zugewandt angeordnet sind. Für die Ankopplung der Luftversorgungseinrichtung 1 an eine hier nicht mit dargestellte Belüftungsquelle 8 ist ein Luftkanalelement 9 vorgesehen, wobei hier zwei unterschiedliche Ausführungsvarianten des Luftkanalelements 9 und 9' gezeigt sind. Das Luftkanalelement 9' besteht aus zwei Einzelteilen, so dass damit in Abhängigkeit beispielsweise eines Radstandes eines Fahrzeuges, in das die Luftversorgungseinrichtung 1 montiert wird, eine einfache und flexible Ankopplung der Belüftungsquelle 8 an den Luftführungskanal 2 mittels dem Luftkanalelement 9 oder 9' hergestellt werden kann. Der Dachhimmel 6 kann für eine einfache und kostengünstige Ausführungsvariante durch eine flexible plane Holzfaserplatte gebildet sein, in die Ausnehmungen einerseits als Luftausströmerdüse-Ausnehmungen 10 und andererseits als Dachhimmelausnehmungen 11, die für die Herstellung einer Steck- und Schiebeverbindung bei der Montage des Luftführungskanals 2 Verwendung finden, ausgestanzt sind. Zudem sind Anschlusselement-Aussparungsöffnungen 17 im Dachhimmel 6 vorgesehen. Zur Vereinfachung der Montage des Dachhimmels 6 ist dieser bei dem in Fig. 1 gezeigten Ausführungsbeispiel zweiteilig ausgeführt. Am Luftführungskanal 2 sind Bolzen 12 vorgesehen, mit denen im Zusammenwirken mit den Dachhimmelausnehmungen 12 Steck- und Schiebeverbindungen zur Montage des Luftführungskanals 2 am Dachhimmel 6 hergestellt werden können.

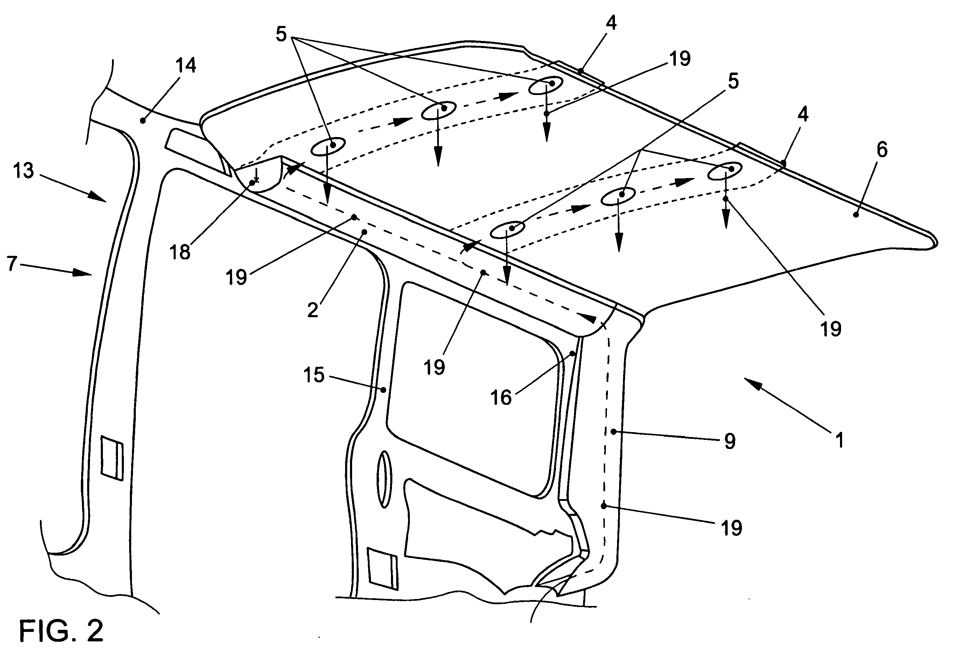

In Fig. 2 ist die Luftversorgungseinrichtung 1 im montierten Zustand in einem Fahrzeug 13 schematisch und perspektivisch dargestellt. Die dargestellte Blickrichtung entspricht einer Ansicht vom Fahrzeuginnenraum 7 schräg nach oben in Richtung einem Dachholm 14 des Fahrzeugs 13. Aus Übersichtlichkeitsgründen ist vom Fahrzeug 13 nur ein Seitenteil 15 mit dem entsprechenden Dachholm 14 gezeigt. An einer D-Säule 16 des Fahrzeugs 13 ist vertikal ausgerichtet das Luftkanalelement 9 das mit der hier nicht mit dargestellten Belüftungsquelle 8 gekoppelt ist, angeordnet, das im Bereich des Dachholms 14 mit dem Luftführungskanal 2 strömungsmäßig gekoppelt ist. Der Luftführungskanal 2 verläuft an der Dachhimmelunterseite des Dachhimmels 6 in Fahrzeuglängsrichtung, wobei die Luftführungskanal-Anschlusselemente 3 durch die Anschlusselement-Aussparungsöffnungen 17 im Dachhimmel 6 hindurchragen. Der Luftführungskanal 2 ist seitlich im Fahrzeug 13 im Bereich des Dachholmes 14 angeordnet, so dass durch den innerhalb des Fahrzeuginnenraums 7 angeordneten Luftführungskanal 2 die Ladehöhe bzw. die Kopffreiheit des Fahrzeuginnenraums 7 in den dafür relevanten Bereichen, insbesondere im Bereich der Fahrzeuglängsmitte, nicht eingeschränkt wird. An der Dachhimmeloberseite des Dachhimmels 6 sind die beiden Luftverteilerkanäle 4 jeweils in Fahrzeugquerrichtung über die gesamte Fahrzeugbreite verlaufend angeordnet, wobei die Luftverteilerkanäle 4 so auf der Dachhimmeloberseite angeordnet sind, dass die Luftausströmerdüse-Ausnehmungen 10 durch die Luftverteilerkanäle 4 überdeckt sind. An einem Ende des Luftführungskanals 2, das dem Anschlussende mit dem Luftkanalelement 9 gegenüberliegt, ist eine Fixierschraube 18 vorgesehen, die eine Sicherung für den Luftführungskanal 2 im montierten Zustand zusätzlich zu der Steck- und Schiebeverbindung zwischen Luftführungskanal 2 und Dachhimmel 6 ausbildet. Mit Pfeilen 19 ist der Luftströmungsweg in Fig. 2 eingezeichnet. Von der hier nicht mit dargestellten Belüftungsquelle 8 kommend strömt die Luft im Bereich der D-Säule 16 durch das Luftkanalelement 9 vertikal nach oben und wird im Bereich des Dachholms 14 in den Luftführungskanal 2 umgelenkt. Durch den Luftführungskanal 2 strömt die Luft in Fahrzeuglängsrichtung verlaufend jeweils zu den Luftführungskanal-Anschlusselementen 3 und von diesen in die zugeordneten Luftverteilerkanäle 4. Durch die Luftverteilerkanäle 4 wird der Luftstrom auf die gesamte Fahrzeugbreite verteilt und kann durch die Luftausströmerdüsen 6 in den Fahrzeuginnenraum 7 ausströmen.

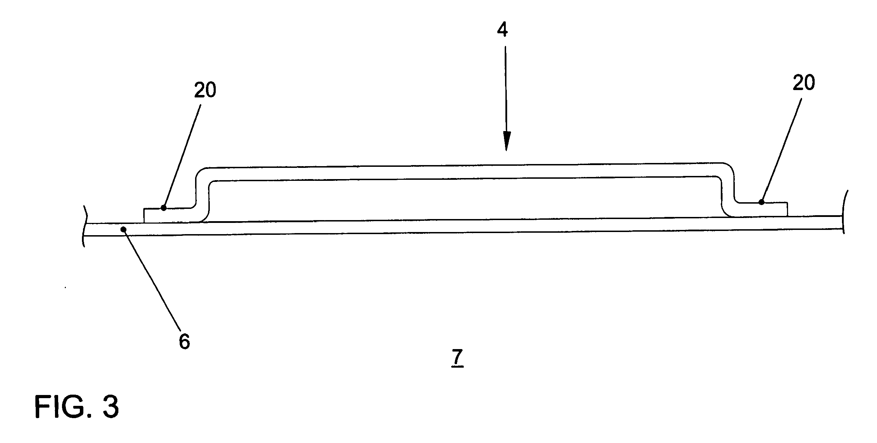

In Fig. 3 ist eine schematische Schnittdarstellung durch einen Luftverteilerkanal 4 gezeigt. Der Luftverteilerkanal 4 weist dabei im Querschnitt gesehen einen nach unten offenes hutförmiges Profil mit Befestigungsflanschen 20 auf, wobei die Befestigungsflansche 20 auf der Dachhimmeloberseite des Dachhimmels 6 durch Kleben und/oder Verschmelzen und/oder Tackern und/oder Schweißen angebunden sind. Somit bildet die Dachhimmeloberseite einen Wandbereich des Luftverteilerkanals 4, so dass der Luftverteilerkanal 4 als einfaches Bauteil beispielsweise durch Tiefziehen kostengünstig hergestellt werden kann.

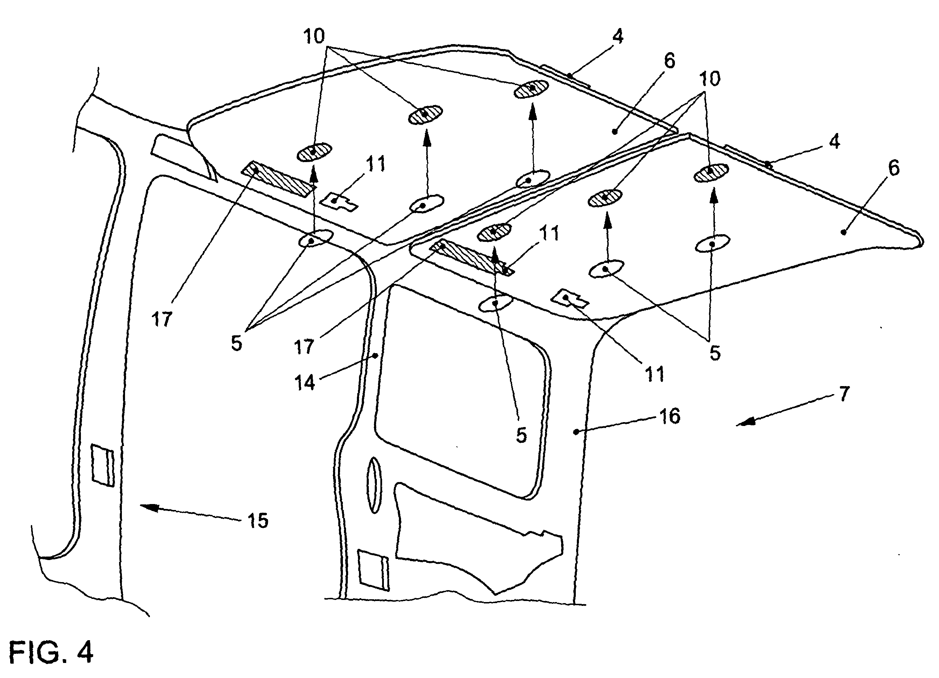

In Fig. 4 ist schematisch und perspektivisch ein Teilbereich der Luftversorgungseinrichtung 1 gezeigt, wobei hier nur die Montage der Luftausströmerdüsen 5 am Dachhimmel 6 erläutert werden soll. Auf der Dachhimmeloberseite des Dachhimmels 6 sind die beiden Luftverteilerkanäle 4 im Bereich der Luftausströmerdüse-Ausnehmungen 10 montiert, so dass die Luftausströmerdüsen 5 vom Fahrzeuginnenraum 7 aus einfach in die Luftausströmerdüse-Ausnehmungen 10 eingeklipst werden können. Grundsätzlich können die Luftausströmerdüsen 5 auch durch eine Schraubverbindung bzw. durch eine Verklebung am Dachhimmel 6 montiert werden. Im seitlichen Randbereich des Dachhimmels 6, der dem Dachholm 14 zugeordnet ist, sind zudem die weiteren Ausstanzungen im Dachhimmel 6 zu erkennen, nämlich in Fahrtrichtung von vorne nach hinten eine Anschlusselement-Aussparungsöffnung 17, eine Dachhimmelausnehmung 11, eine Anschlusselement-Aussparungsöffnung 17, die mit einer Dachhimmelausnehmung 11 kombiniert ist, und im Bereich der D-Säule 16 nochmals eine Dachhimmelausnehmung 11.

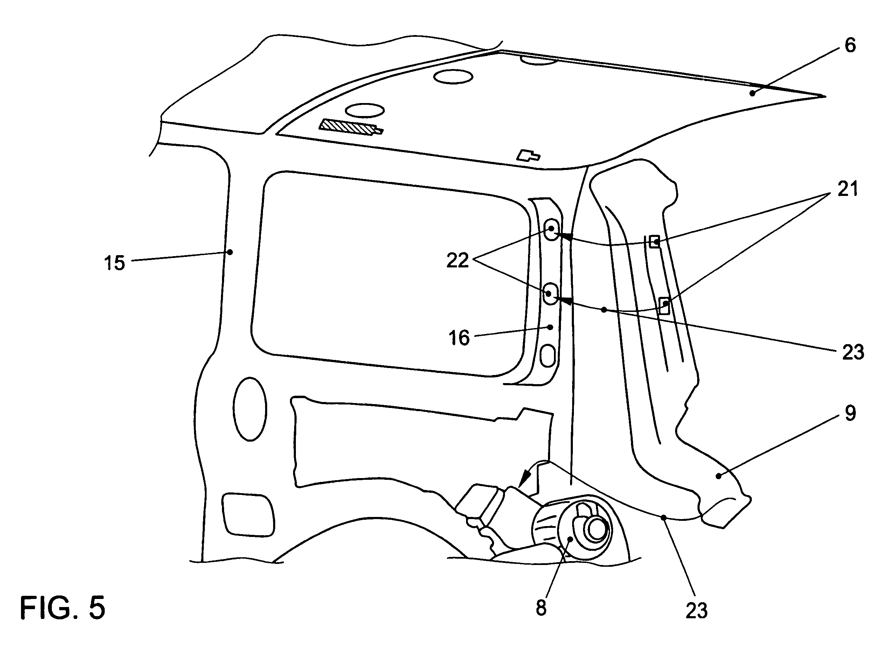

In Fig. 5 ist schematisch und perspektivisch ein Teilbereich der Luftversorgungseinrichtung 1 gezeigt, wobei hier die Montage des Luftkanalelements 9 gezeigt werden soll. An der im montierten Zustand der D-Säule 16 zugewandten Wandseite des Luftkanalelements 9 sind Kunststoff-Ausformungen 21 angeordnet, denen an der D-Säule 16 entsprechende Ausnehmungen 22 zugeordnet sind. So kann das Luftkanalelement 9 einfach in die Belüftungsquelle 8 entsprechend eingesteckt werden und zudem mit den Kunststoff-Ausformungen 21 in die zugeordneten Ausnehmungen 22 an der D-Säule 16 eingeklipst werden. Somit kann das Luftkanalelement 9 schnell und einfach, aber trotzdem funktionssicher an der D-Säule 16 montiert werden. Mit Pfeilen 23 ist die entsprechende Montagefolge in Fig. 5 eingezeichnet.

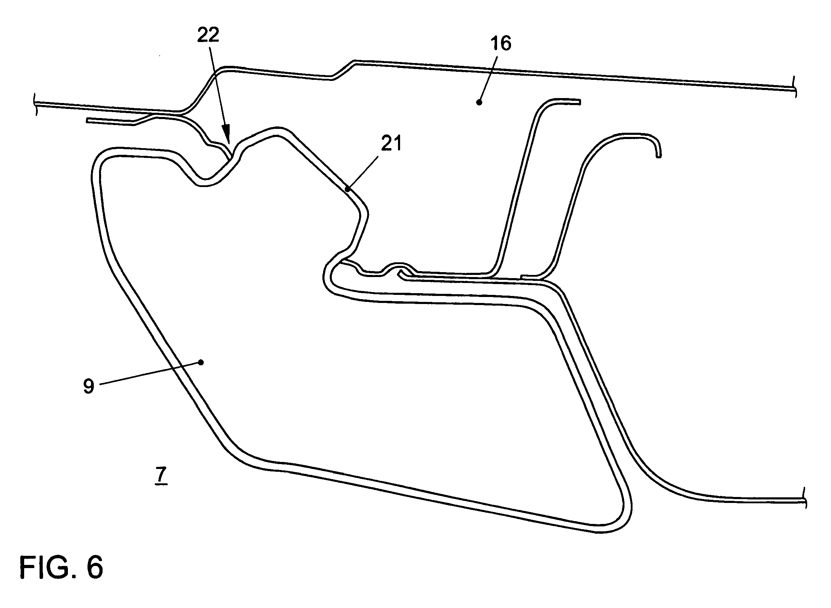

In Fig. 6 ist eine schematische Schnittdarstellung durch das Luftkanalelement 9 im Bereich der Kunststoff-Ausformung 21 im montierten Zustand gezeigt. Dabei ist zu erkennen, dass die Kunststoff-Ausformung 21 so gebildet ist, dass im montierten Zustand ein Hintergreifen der Kunststoff-Ausformung 21 in der Ausnehmung 22 erfolgt. Damit ist das Luftkanalelement 9 auch während des Fahrbetriebs sicher an der D-Säule 16 gehalten.

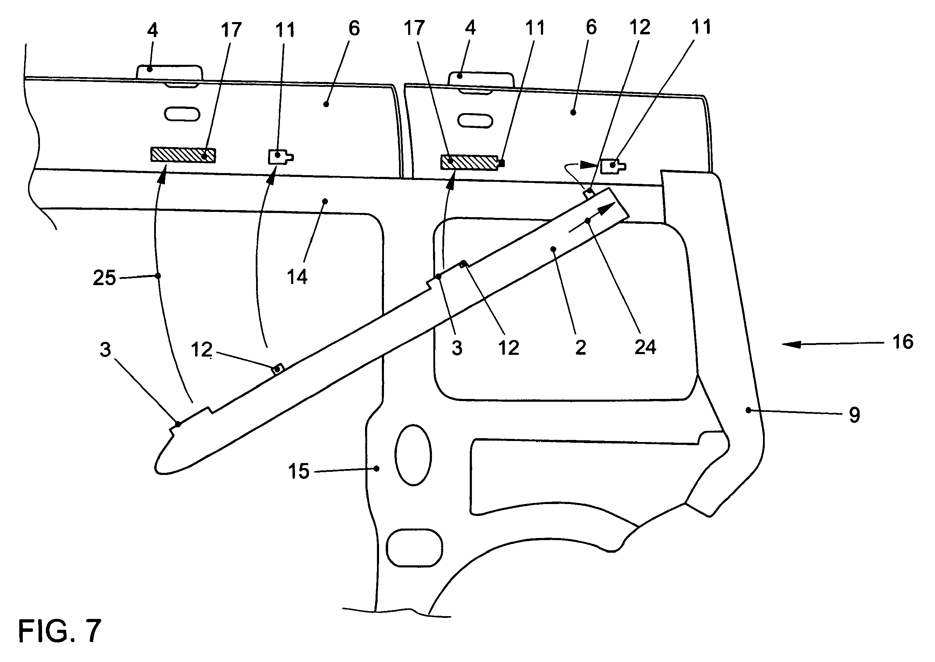

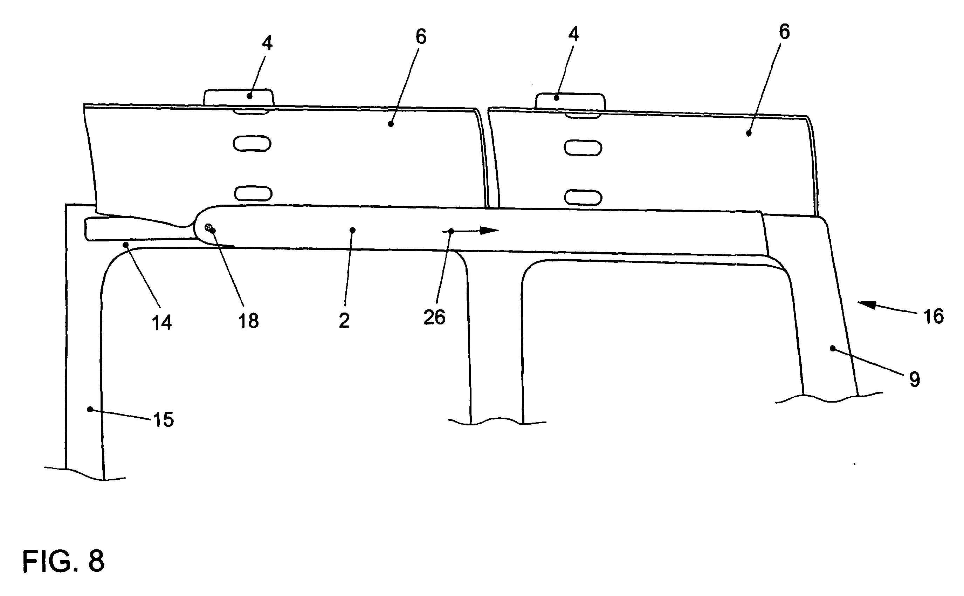

In Fig. 7 und 8 sind die Montageschritte zur Montage des Luftführungskanals 2 am Dachhimmel 6 gezeigt. Zuerst wird der Luftführungskanal 2 mit einem Ende in das Luftkanalelement 9 eingeführt (Pfeil 24) und anschließend wird der Luftführungskanal 2 in Richtung Dachholm 14 verschwenkt (Pfeil 25). Beim Verschwenken des Luftführungskanal 2 greifen die Luftführungskanal-Anschlusselemente 3 in die entsprechend zugeordneten Anschlusselement-Aussparungsöffnungen 17 und die Bolzen 12 in die entsprechend zugeordneten Dachhimmelausnehmungen 11 ein. Zur Fertigstellung der Steck- und Schiebeverbindung wird der Luftführungskanal 2 anschließend in Richtung Luftkanalelement 9 verschoben, wie dies in Fig. 8 gezeigt ist (Pfeil 26). Somit ist die Steck- und Schiebeverbindung zur Montage des Luftführungskanals 2 am Dachhimmel 6 hergestellt. Für eine zusätzliche Fixierung kann die Fixierschraube 18, die im Endbereich des Luftführungskanals 2 angeordnet ist, eingeschraubt werden.

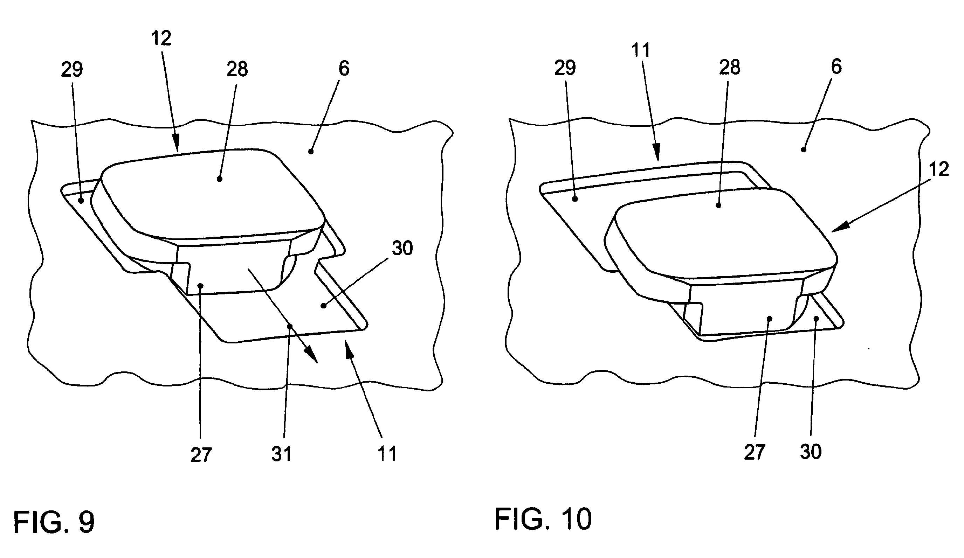

In den Fig. 9 und 10 ist beispielhaft die Herstellung einer Steck- und Schiebeverbindung in Detailansichten erläutert. Durch das während der Montage des Luftführungskanals 2 erfolgte Einschwenken (Pfeil 25 in Fig. 7) wird der Bolzen 12 in die entsprechend zugeordnete Dachhimmelausnehmung 11 eingesteckt. Der Bolzen 12 besteht dabei aus einem Bolzensteg 27 und einem dem gegenüber breiteren Bolzenkopf 28. Die Dachhimmelausnehmung 11 ist schlüssellochartig ausgebildet und weist eine Bolzenaufnahme 29 und einen daran anschließenden, schmaler ausgeführten und von den Abmessungen her in etwa dem Bolzensteg 27 angepassten nutenförmigen Schlitzbereich 30 auf. Durch das Einschwenken des Luftführungskanals 2 ragt der Bolzen 12 mit dem Bolzenkopf 28 im Bereich der Bolzenaufnahme 29 durch den Dachhimmel 6 hindurch und anschließend wird durch das Verschieben des Luftführungskanals 2 (Pfeil 26 in Fig. 8) der Bolzen 12 in Richtung Schlitzbereich 30 der Dachhimmelausnehmung 11 verschoben (Pfeil 31 in Fig. 9), so dass der Bolzenkopf 28 in seiner Verschiebeendposition die Dachhimmelausnehmung 11 im Schlitzbereich 30 hintergreift. Die Verschiebeendposition ist in Fig. 10 dargestellt. Mit einer solchen Steckund Schiebeverbindung ist einfach und funktionssicher die Montage des Luftführungskanals 2 am Dachhimmel 6 möglich.

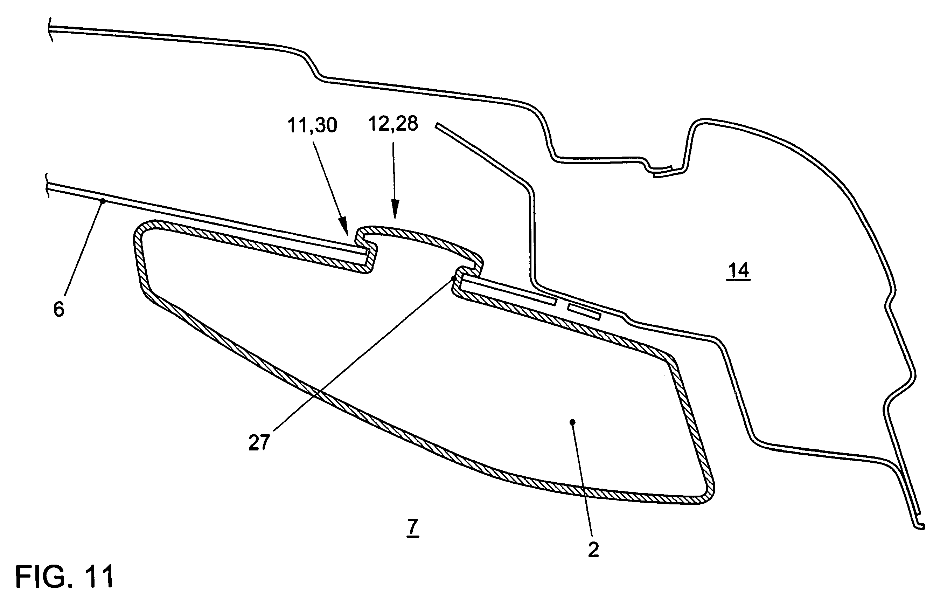

In Fig. 11 ist eine schematische Schnittdarstellung durch den Luftführungskanal 2 im Bereich des Bolzens 12 im montierten Zustand gezeigt. Dabei ist das Hintergreifen des Bolzenkopfes 28 im Schlitzbereich 30 der Dachhimmelausnehmung 11 zu erkennen.

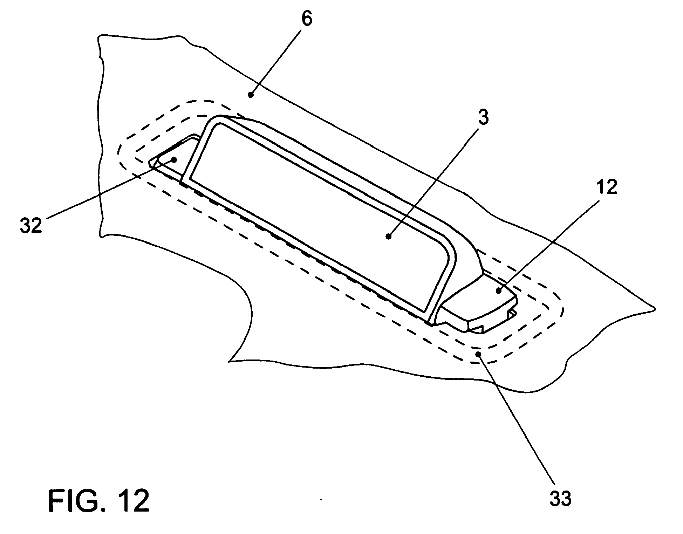

Der Bolzen 12 kann dabei beabstandet von einem Luftführungskanal-Anschlusselement 3 am Luftführungskanal 2 ausgeführt sein. Des weiteren besteht die Möglichkeit, den Bolzen 12 im Bereich des Luftführungskanal-Anschlusselements 3 anzuordnen, wie dies schematisch und perspektivisch in einer Ansicht von schräg oben in Fig. 12 gezeigt ist. Der Luftführungskanal 2 ist dabei im montierten Zustand am Dachhimmel 6 dargestellt, so dass der Bolzenkopf 28 den Schlitzbereich 30 der Dachhimmelausnehmung 11, die in dieser Ausführung mit der Anschlusselement-Aussparungsöffnung 17 kombiniert ist, hintergreift. Direkt an den Bolzen 12 anschließend ist das Luftführungskanal-Anschlusselement 3 angeordnet, das durch die Anschlusselement-Aussparungsöffnung 17 hindurchragt und somit eine strömungsmäßige Verbindung zwischen dem Luftführungskanal 2 und dem Luftverteilerkanal 4 (hier nicht mit dargestellt) herstellt. Gegenüberliegend zum Bolzen 12 ist am Luftführungskanal-Anschlusselement 3 eine Fixiernase 32 angeordnet, die im montierten Zustand des Luftführungskanals 2 mit dem Öffnungsrandbereich der Anschlusselement-Aussparungsöffnung 17 zusammenwirkt, so dass ein Verschieben des Luftführungskanals 2 entsprechend blockiert ist. Soll der Luftführungskanal 2 wieder demontiert werden, so kann der Luftführungskanal 2 einfach vom Dachhimmel 6 weg verschwenkt werden, so dass dadurch die Fixiernase 32 vom Öffnungsrandbereich der Anschlusselement-Aussparungsöffnung 17 mit wegverschwenkt wird. Dadurch ist die Verschiebeblockade, die durch die Fixiernase 32 im montierten Zustand gegeben ist, aufgehoben, so dass der Luftführungskanal 2 zur Auflösung der Steck- und Schiebeverbindung, die durch den Bolzen 12 und die entsprechend zugeordnete Dachhimmelausnehmung 11 gebildet ist, verschoben werden kann. Zudem ist in Fig. 12 strichliert eine Dichtung 33 eingezeichnet, die zwischen dem Dachhimmel 6 an der Dachhimmelunterseite und dem Luftführungskanal 2 umlaufend um das Luftführungskanal-Anschlusselement 3 angeordnet ist. Dadurch wird der Anschlussbereich zwischen Luftführungskanal 2 und Luftverteilerkanal 4 abgedichtet, wobei zudem durch die Dichtung 33 eine entsprechende Klapperfreiheit zwischen dem Luftführungskanal 2 und dem Dachhimmel 6 gewährleistet werden kann.

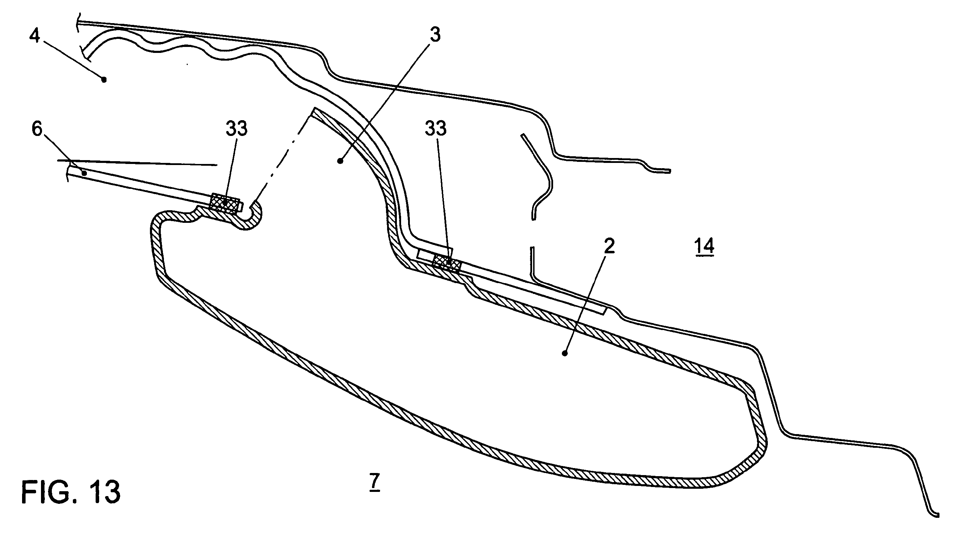

In Fig. 13 ist schematisch eine Schnittdarstellung durch den Luftführungskanal 2 im Bereich eines Luftführungskanal-Anschlusselements 3 im montierten Zustand gezeigt. Dabei ist die Einbaulage der Dichtung 33 zu erkennen, die zwischen dem Dachhimmel 6 und dem entsprechenden Außenwandbereich des Luftführungskanals 2 dicht verpresst angeordnet ist. Die Dichtung 33 kann dabei entweder am dachhimmelunterseitigen Aussparungsöffnungsrandbereich der Anschlusselement-Aussparungsöffnung 17 oder am Luftführungskanal 2 im Bereich des Luftführungskanal-Anschlusselements 3 um dieses umlaufend vormontiert werden.

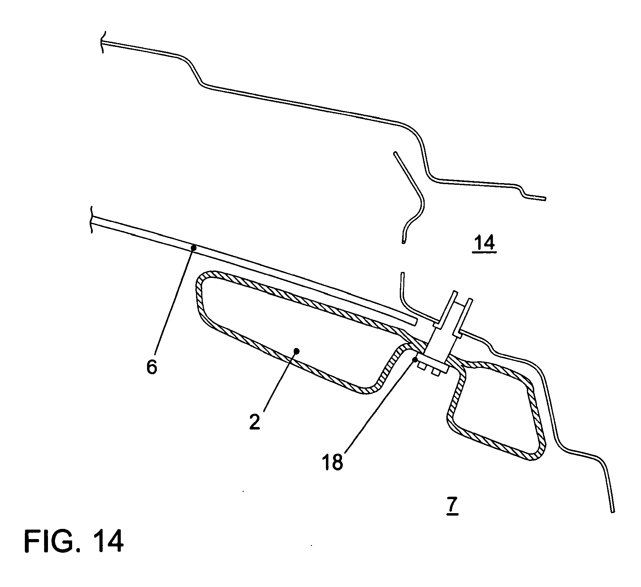

In Fig. 14 ist eine schematische Schnittdarstellung durch den Luftführungskanal 2 im Bereich der Fixierschraube 18 im montierten Zustand gezeigt. Als Sicherung der Steckund Schiebeverbindung, die zwischen dem Luftführungskanal 2 und dem Dachhimmel 6 hergestellt wird, kann die Fixierschraube 18 in den Dachholm 14 eingeschraubt werden. Die Anordnung der Fixierschraube 18 am Luftführungskanal 2 erfolgt dabei vorteilhaft im Endbereich des Luftführungskanals 2, der dem Anschlussbereich zum Luftkanalelement 9 gegenüberliegt (siehe Fig. 8).

Somit ist insgesamt eine Luftversorgungseinrichtung 1 geschaffen, die aus wenigen und kostengünstig herstellbaren Bauteilen besteht. Zudem ist eine einfache Montage der einzelnen Bauteile insbesondere durch Herstellung von Steck- und Schiebeverbindungen möglich. Durch diese erfindungsgemäße einfache Lösung, bei dem der Luftführungskanal 2 und das Luftkanalelement 9 vom Fahrzeuginnenraum 7 aus sichtbar sind, ist eine Luftversorgungseinrichtung 1 insbesondere für Nutzfahrzeuge, die mit einem geringeren Innenausstattungskomfort ausgestattet werden sollen, geschaffen.

### BEZUGSZEICHENLISTE

- 1: Luftversorgungseinrichtung
- 2: Luftführungskanal
- 3: Luftführungskanal-Anschlusselement
- 4: Luftverteilerkanal
- 5: Luftausströmerdüse
- 6: Dachhimmel
- 7: Fahrzeuginnenraum
- 8: Belüftungsquelle
- 9/9': Luftkanalelement
- 10: Luftausströmerdüse-Ausnehmung
- 11: Dachhimmelausnehmung
- 12: Bolzen
- 13: Fahrzeug
- 14: Dachholm
- 15: Seitenteil
- 16: D-Säule
- 17: Anschlusselement-Aussparungsöffnung
- 18: Fixierschraube
- 19: Pfeil
- 20: Befestigungsflansch
- 21: Kunststoff-Ausformung
- 22: Ausnehmung
- 23: Pfeil
- 24: Pfeil
- 25: Pfeil
- 26: Pfeil
- 27: Bolzensteg
- 28: Bolzenkopf
- 29: Bolzenaufnahme
- 30: Schlitzbereich
- 31: Pfeil
- 32: Fixiernase
- 33: Dichtung

## Patentansprüche

1. Luftversorgungseinrichtung (1) zur Klimatisierung eines Fahrzeuginnenraums (7) eines Fahrzeugs (13), insbesondere eines Nutzfahrzeuges,
mit einem in einem Fahrzeuginnenraum anordenbaren Dachhimmel (6), auf dessen im montierten Zustand dem Fahrzeugdach zugewandter Dachhimmeloberseite wenigstens ein mit einer Belüftungsquelle koppelbarer Luftverteilerkanal (4) angeordnet ist, der sich wenigstens über einen Teilbereich der Dachhimmeloberseite erstreckt und diesen überdeckt wobei im überdeckten Teilbereich der Dachhimmeloberseite wenigstens eine Luftausströmerdüse im Dachhimmel (6) für einen Luftdurchtritt in den Fahrzeuginnenraum hinein vorgesehen ist, und mit einem Luftführungskanal (2), der mittelbar oder unmittelbar mit der Belüftungsquelle (8) und mittels wenigstens einem Luftführungskanal-Anschlusselement (3) mit dem wenigstens einen Luftverteilerkanal (4) auf der Dachhimmeloberseite gekoppelt ist,
**dadurch gekennzeichnet,**
**dass** der Luftführungskanal (2) sich im montierten Zustand mit einer Luftführungskanal-Längsseite entlang einer dem Fahrzeuginnenraum (7) zugewandten Dachhimmelunterseite erstreckt.

2. Luftversorgungseinrichtung nach Anspruch 1, **dadurch gekennzeichnet, dass** das wenigstens eine Luftführungskanal-Anschlusselement (3) durch entsprechende Anschlusselement-Aussparungsöffnungen (17) im Dachhimmel (6) vorzugsweise formschlüssig und/oder dicht hindurchgeführt und mit dem Luftverteilerkanal (4) gekoppelt ist.

3. Luftversorgungseinrichtung nach Anspruch 1 oder 2, **dadurch gekennzeichnet, dass** der Luftführungskanal (2) mittels wenigstens einer als Rast- und/oder als Steck- und/oder Schiebeverbindung ausgebildeten Schnellverbindung am Dachhimmel (6) vorzugsweise lösbar verrastbar und/oder verriegelbar ist.

4. Luftversorgungseinrichtung nach Anspruch 3, **dadurch gekennzeichnet, dass** der Luftführungskanal (2) mittels wenigstens einer Steck- und Schiebeverbindung am Dachhimmel (6) verriegelbar ist dergestalt, dass am Luftführungskanal (2) zur Ausbildung der jeweiligen Steck- und Schiebeverbindung ein Bolzen (12) vorgesehen ist, der einen Bolzensteg (27) und einen demgegenüber breiteren Bolzenkopf (28) aufweist, wobei der Bolzen (12) mit dem Bolzenkopf (28) durch eine dachhimmelseitige Bolzenaufnahme (29) einer schlüssellochartigen Dachhimmelausnehmung (11), an die sich ein gegenüber dem Bolzenkopf (28) schmaler und von den Abmessungen her in etwa an den Bolzensteg (27) angepasster nutenförmiger Schlitzbereich (30) anschließt, steckbar ist, so dass anschließend der Bolzen (12) mit seinem Bolzensteg (27), vorzugsweise mit einem Klemmschluss und/oder mit einem Formschluss, von der Bolzenaufnahme (29) ausgehend in den Schlitzbereich (30) einschiebbar ist und der Bolzenkopf (28) in seiner Verschiebeendposition die Dachhimmelausnehmung (11) im Schlitzbereich (30) hintergreift.

5. Luftversorgungseinrichtung nach Anspruch 4, **dadurch gekennzeichnet, dass** im Bereich des Bolzens (12) ferner wenigstens eine Fixiemase (32) vorgesehen ist, die nach einer Überführung des Bolzens (12) in dessen Verschiebeendposition in den Bereich der Dachhimmelausnehmung, vorzugsweise in den Bereich der Bolzenaufnahme (29), vorzugsweise lösbar einbringbar, vorzugsweise einschiebbar und/oder einschwenkbar ist, dergestalt, dass die Fixiemase (32) im Zusammenwirken mit einem dachhimmelausnehmungsseitigen Gegenelement, vorzugsweise einem Öffnungsrandbereich, ein Verschieben des Bolzens (12) und damit des Luftführungskanales (2) blockiert.

6. Luftversorgungseinrichtung nach Anspruch 4 oder 5, **dadurch gekennzeichnet, dass** die Steck- und Schiebeverbindung an dem Luftführungskanal (2) im Bereich des Luftführungskanal-Anschlusselementes (3) ausgebildet ist.

7. Luftversorgungseinrichtung nach einem der Ansprüche 4 bis 6, **dadurch gekennzeichnet, dass** die Steck- und Schiebeverbindung an einem Außenwandbereich des Luftführungskanals (2) beabstandet von dem wenigstens einen Luftführungskanal-Anschlusselement (3) angeordnet ist.

8. Luftversorgungseinrichtung nach einem der Ansprüche 3 bis 7, **dadurch gekennzeichnet, dass** der Luftführungskanal (2) nach Herstellung der Schnellverbindung mit dem Dachhimmel (6) mittels wenigstens einem Fixierelement (18) am Dachhimmel (6), vorzugsweise im Bereich eines der Belüftungsquelle (8) gegenüberliegenden freien Luftführungskanalendes fixierbar ist.

9. Luftversorgungseinrichtung nach Anspruch 2 und einem der Ansprüche 3 bis 8, **dadurch gekennzeichnet, dass** eine um das Luftführungskanal-Anschlusselement (3) ringförmig herumgeführte Dichtung (33) vorgesehen ist, die im montierten Zustand einerseits an einem dachhimmelunterseitigen Aussparungsöffnungsrandbereich und andererseits an einem entsprechend zugeordneten Luftführungskanalbereich, vorzugsweise einem Außenwandbereich des Luftführungskanals (2) dicht verpresst anliegt.

10. Luftversorgungseinrichtung nach Anspruch 2 und einem der Ansprüche 3 bis 9, **dadurch gekennzeichnet, dass** das wenigstens eine Luftführungskanal-Anschlusselement (3) durch einen Anschlussstutzen ausgebildet ist, der vorzugsweise einen rechteckförmigen Querschnitt aufweist.

11. Luftversorgungseinrichtung nach einem der Ansprüche 1 bis 10, **dadurch gekennzeichnet, dass** der Luftführungskanal (2) sich im montierten Zustand im Fahrzeuginnenraum (7) an der Dachhimmelunterseite randseitig im dachholmnahen Bereich (14) in Fahrzeuglängsrichtung erstreckt, vorzugsweise im Fahrzeugfondbereich.

12. Luftversorgungseinrichtung nach Anspruch 11, **dadurch gekennzeichnet, dass** sich der Luftführungskanal (2), vorzugsweise im Fahrzeugfondbereich eines Kombi- oder Nutzfahrzeuges, bis in etwa in den Bereich einer Vertikalsäule, vorzugsweise einer D-Säule (16), erstreckt und mit einer dort angeordneten Belüftungsquelle (8), vorzugsweise einem Gebläse, gekoppelt ist, insbesondere mittels wenigstens einem sich entlang der Vertikalsäule (16) und/oder einem Dachholmendbereich in Fahrzeuglängsrichtung erstreckenden Luftkanalelement (9; 9') mit der Belüftungsquelle (8).

13. Luftversorgungseinrichtung nach Anspruch 12, **dadurch gekennzeichnet, dass** das die Belüftungsquelle (8) mit dem Luftführungskanal (2) verbindende Luftkanalelement (9; 9') an der D-Säule (16) mittels wenigstens einer Rast- und/oder Schiebe- und/oder Steckverbindung als Schnellverbindung verrastbar ist, vorzugsweise mittels Ausnehmungen (22) in der Säule (16) hintergreifenden Kunststoff-Ausformungen (21) am Luftkanalelement (9; 9').

14. Luftversorgungseinrichtung nach einem der Ansprüche 1 bis 13, **dadurch gekennzeichnet, dass** sich der auf der Dachhimmeloberseite angeordnete wenigstens eine Luftverteilerkanal (4) über den Dachhimmel (6) zwischen gegenüberliegenden Fahrzeugseiten in Fahrzeugquerrichtung erstreckt, vorzugsweise in einem unverstärktem Fahrzeugdachbereich.

15. Luftversorgungseinrichtung nach Anspruch 2 und einem der Ansprüche 3 bis 14, **dadurch gekennzeichnet,**
**dass** auf der Dachhimmeloberseite wenigstens zwei Luftverteilerkanäle (4) vorgesehen sind, die beabstandet voneinander und in etwa parallel zueinander ausgerichtet sind und in Fahrzeugquerrichtung zwischen gegenüberliegenden Fahrzeugseiten auf der Dachhimmeloberseite verlaufen, und
**dass** jeder dieser separaten Luftverteilerkanäle (4) mittels einem separaten Luftführungskanal-Anschlusselement (3) mit dem Luftführungskanal (2) strömungsverbunden ist.

16. Luftversorgungseinrichtung nach einem der Ansprüche 1 bis 15, **dadurch gekennzeichnet, dass** der Luftverteilerkanal (4) im Querschnitt ein nach unten offenes, vorzugsweise U-förmiges und/oder hutförmiges Profil mit Befestigungsflanschen (20) an den freien Enden aufweist dergestalt, dass der überdeckte Dachhimmeloberseitenbereich Bestandteil der oberseitigen Luftführung ist.

17. Luftversorgungseinrichtung nach einem der Ansprüche 1 bis 16, **dadurch gekennzeichnet, dass** der wenigstens eine Luftverteilerkanal (4) mit der Dachhimmeloberseite durch Kleben und/oder Verschmelzen und/oder Tackern und/oder Schweißen verbunden ist.

18. Luftversorgungseinrichtung nach einem der Ansprüche 1 bis 17, **dadurch gekennzeichnet, dass** der wenigstens eine Luftverteilerkanal (4) aus einem flexiblen, Karton- und/oder Papp- und/oder Holzfaser- und/oder Kunststoffmaterial, vorzugsweise einem Kunststoffschaum, vorzugsweise einem Polyethylen-Schaum hergestellt ist.

19. Luftversorgungseinrichtung nach einem der Ansprüche 1 bis 18, **dadurch gekennzeichnet, dass** der Luftführungskanal (4) und gegebenenfalls damit gekoppelte Luftkanalelemente (9; 9') zum Anschluss an eine Belüftungsquelle (8) einstückig als Kunststoffblasteil, vorzugsweise als genarbtes Kunststoffbtasteil, vorzugsweise aus Polypropylen, hergestellt ist.

20. Luftversorgungseinrichtung nach einem der Ansprüche 1 bis 19, **dadurch gekennzeichnet, dass** der Dachhimmel (6) als flexible, plane und vorzugsweise dimensionsstabile Platte, vorzugsweise aus einem Kunststoff- und/oder Karton- und/oder Papp- und/oder Holzfasermaterial, hergestellt ist.

21. Luftversorgungseinrichtung nach Anspruch 20, **dadurch gekennzeichnet, dass** die Ausnehmungen (10; 11; 17) für Funktions- und/oder Anbauteile aus dem Dachhimmel (6) ausgestanzt sind.

22. Luftversorgungseinrichtung nach Anspruch 20 oder 21, **dadurch gekennzeichnet, dass** der Dachhimmel (6), vorzugsweise der für den Fondbereich vorgesehene Dachhimmelteil mehrteilig ausgebildet ist.

## Claims

1. Air supply unit (1) for air-conditioning a passenger compartment (7) of a vehicle (13), in particular of a utility vehicle, with a roof lining (6) which can be arranged in a vehicle passenger compartment and on the upper side of which, which, in the fitted state, faces the vehicle roof, is arranged at least one air-distributing duct (4) which can be coupled to a ventilation source, extends at least over a partial region of the upper side of the roof lining and covers the latter, where, in the covered partial region of the upper side of the roof lining, at least one air discharge nozzle is provided in the roof lining (6) for passage of air into the vehicle passenger compartment, and with an air-guiding duct (2) which is coupled indirectly or directly to the ventilation source (8) and, by means of at least one air-guiding duct connecting element (3), is coupled to the at least one air-distributing duct (4) on the upper side of the roof lining, **characterized in that**, in the fitted state, the air-guiding duct (2) extends with a longitudinal side of the air-guiding duct along a lower side of the roof lining facing the vehicle passenger compartment (7).

2. Air supply unit according to Claim 1, **characterized in that** the at least one air-guiding-duct connecting element (3) is guided through corresponding connecting-element cut out openings (17) in the roof lining (6) preferably in a form-fitting manner and/or in a tight-fitting manner and is coupled to the air-distributing duct (4).

3. Air supply unit according to Claim 1 or 2, **characterized in that** the air-guiding duct (2) can be latched and/or can be locked, preferably releasably, to the roof lining (6) by means of at least one rapid-action connection designed as a latching and/or as a plug-in and/or sliding connection.

4. Air supply unit according to Claim 3, **characterized in that** the air-guiding duct (2) can be locked to the roof lining (6) by means of at least one plug-in and sliding connection in such a manner that a bolt (12) is provided on the air-guiding duct (2) to form the respective plug-in and sliding connection, the bolt having a bolt web (27) and a bolt head (28) which is wider than it, the bolt (12) being pluggable with the bolt head (28) through a roof lining-side bolt receptacle (29) in a keyhole-like roof lining recess (11), which is adjoined by a groove-shaped slotted region (30) which is narrower than the bolt head (28) and is approximately matched in terms of dimensions to the bolt web (27), so that, subsequently, the bolt (12) can be slid with its bolt web (27), from the bolt receptacle (29) into the slotted region (30), preferably with a clamping connection and/or with a form-fitting connection, and the bolt head (28), in its final position of displacement, engages behind the roof lining recess (11) in the slotted region (30).

5. Air supply unit according to Claim 4, **characterized in that** furthermore at least one fixing lug (32) is provided in the region of the bolt (12), which fixing lug, after the bolt (12) has been transferred into its final position of displacement, can be placed, preferably slid and/or pivoted, preferably releasably, into the region of the roof lining recess, preferably into the region of the bolt receptacle (29), in such a manner that the fixing lug (32) in interaction with a roof lining-recess-side mating element, preferably an opening edge region, blocks a displacement of the bolt (12) and therefore of the air-guiding duct (2).

6. Air supply unit according to Claim 4 or 5, **characterized in that** the plug-in and sliding connection on the air-guiding duct (2) is formed in the region of the air-guiding-duct connecting element (3).

7. Air supply unit according to one of claims 4 to 6, **characterized in that** the plug-in and sliding connection is arranged on an outer wall region of the air-guiding duct (2) at a distance from the at least one air-guiding-duct connecting element (3).

8. Air supply unit according to one of Claims 3 to 7, **characterized in that**, after production of the rapid-action connection to the roof lining (6), the air-guiding duct (2) can be fixed to the roof lining (8), preferably in the region of a free air-guiding-duct end lying opposite the ventilation source (8), by means of at least one fixing element (18).

9. Air supply unit according to Claim 2 and one of Claims 3 to 8, **characterized in that** a seal (33) is provided which is guided annually around the air-guiding-duct connecting element (3) and, in the fitted state, bears in a tightly pressed manner, on the one hand, against a roof lining-lower-side cut-out-opening edge region and, on the other hand, against a correspondingly assigned air-guiding-duct region, preferably against an outer wall region of the air-guiding duct (2).

10. Air supply unit according to Claim 2 and one of Claims 3 to 9, **characterized in that** the at least one air-guiding-duct connecting element (3) is formed by a connecting branch which preferably has a rectangular cross section.

11. Air supply unit according to one of Claims 1 to 10, **characterized in that**, in the fitted state, the air-guiding duct (2) extends in the longitudinal direction of the vehicle, on the edge side of the lower side of the roof lining in the region (14) in the vicinity of the roof strut, in the vehicle passenger compartment (7), preferably in the rear region of the vehicle.

12. Air supply unit according to Claim 11, **characterized in that** the air-guiding duct (2), extends preferably in the rear region of an estate vehicle or utility vehicle, approximately into the region of a vertical pillar, preferably a D-pillar (16), and is coupled to a ventilation source (8) arranged there, preferably a fan, in particular by means of at least one air duct element (9; 9') extending in the longitudinal direction of the vehicle along the vertical pillar (16) and/or an end region of the roof strut.

13. Air supply unit according to Claim 12, **characterized in that** the air duct element (9; 9') connecting the ventilation source (8) to the air-guiding duct (2) can be latched to the D-pillar (16) by means of at least one latching and/or sliding and/or plug-in connection as a rapid-action connection, preferably by means of plastic formations (21) on the air duct element (9; 9') that engage behind recesses (22) in the pillar (16).

14. Air supply unit according to one of Claims 1 to 13, **characterized in that** the at least one air-distributing duct (4) arranged on the upper side of the roof lining extends over the roof lining (6) in the transverse direction of the vehicle between opposite sides of the vehicle, preferably in an unreinforced roof region of the vehicle.

15. Air supply unit according to Claim 2 and one of Claims 3 to 14, **characterized in that** at least two air-distributing ducts (4) are provided on the upper side of the roof lining, the said air-distributing ducts being spaced apart from each other and being oriented approximately parallel to each other and running in the transverse direction of the vehicle on the upper side of the roof lining between opposite sides of the vehicle, and **in that** each of the separate air-distributing ducts (4) is connected in terms of flow to the air-guiding duct (2) by means of a separate air-guiding-duct connecting element (3).

16. Air supply unit according to one of Claims 1 to 15, **characterized in that** the air-distributing duct (4) has, in cross section, a downwardly open, preferably U-shaped and/or hat-shaped profile with fastening flanges (20) at the free ends, in such a manner that the covered upper-side region of the roof lining is part of the top-side air guide.

17. Air supply unit according to one of Claims 1 to 16, **characterized in that** the at least one air-distributing duct (4) is connected to the upper side of the roof lining by adhesive bonding and/or melting and/or stapling and/or welding.

18. Air supply unit according to one of Claims 1 to 17, **characterized in that** the at least one air-distributing duct (4) is produced from a flexible cardboard and/or pasteboard and/or wood-fibre and/or plastic material, preferably a plastic foam, preferably a polyethylene foam.

19. Air supply unit according to one of Claims 1 to 18, **characterized in that** the air-guiding duct (4), and, if appropriate, air duct elements (9; 9') coupled thereto, for connection to a ventilation source (8) is produced as a single piece in the form of a blown plastic part, preferably an embossed blown plastic part, preferably made from polypropylene.

20. Air supply unit according to one of Claims 1 to 19, **characterized in that** the roof lining (6) is produced as a flexible, planar and preferably dimensionally stable panel, preferably made from a plastic and/or cardboard and/or pasteboard and/or wood-fibre material.

21. Air supply unit according to Claim 20, **characterized in that** the recesses (10; 11; 17) for functional and/or add-on parts are punched out of the roof lining (6).

22. Air supply unit according to Claim 20 or 21, **characterized in that** the roof lining (6), preferably the roof lining part provided for the near region, is of multipart design.

## Revendications

1. Dispositif d'alimentation en air (1) pour climatiser l'habitacle (7) d'un véhicule (13), notamment d'un véhicule utilitaire,
comprenant un habillage de plafond (6) pouvant être disposé dans un habitacle du véhicule, et, disposé sur le côté supérieur de d'habillage de plafond tourné vers le plafond du véhicule dans l'état monté, au moins un canal de distribution d'air (4) pouvant être accouplé à une source de ventilation, lequel s'étend sur au moins une région partielle du côté supérieur de l'habillage du plafond et la recouvre, au moins une buse de sortie d'air étant prévue dans l'habillage du plafond (6) dans la région partielle recouverte du côté supérieur de l'habillage du plafond, pour un passage d'air dans l'habitacle du véhicule, et comprenant un canal de guidage d'air (2) qui est accouplé directement ou indirectement à la source de ventilation (8) et, au moyen d'au moins un élément de raccordement de canal de guidage d'air (3), à l'au moins un canal de distribution d'air (4) sur le côté supérieur de l'habillage du plafond,
**caractérisé en ce que**
le canal de guidage d'air (2) s'étend dans l'état monté avec un côté longitudinal de canal de guidage d'air le long d'un côté inférieur de l'habillage de plafond tourné vers l'habitacle du véhicule (7).

2. Dispositif d'alimentation en air selon la revendication 1, **caractérisé en ce que** l'au moins un élément de raccordement de canal de guidage d'air (3) est guidé par des ouvertures d'évidement correspondantes de l'élément de raccordement (17) dans l'habillage du plafond (6) de préférence par engagement positif et/ou de manière étanche et est accouplé au canal de distribution d'air (4).

3. Dispositif d'alimentation en air selon la revendication 1 ou 2, **caractérisé en ce que** le canal de guidage d'air (2) peut être encliqueté ou verrouillé de préférence de manière desserrable au moyen d'au moins une connexion rapide réalisée sous forme de connexion par encliquetage et/ou par enfichage et/ou par coulissement sur l'habillage de plafond (6).

4. Dispositif d'alimentation en air selon la revendication 3, **caractérisé en ce que** le canal de guidage d'air (2) peut être verrouillé au moyen d'au moins une connexion par enfichage et par coulissement sur l'habillage du plafond (6), de telle sorte qu'un boulon (12) soit prévu sur le canal de guidage d'air (2) pour réaliser la connexion en question par enfichage et coulissement, lequel présente une tige de boulon (27) et une tête de boulon (28) plus large par comparaison, le boulon (12) pouvant être enfoncé avec la tête de boulon (28) à travers un logement de boulon (29), du côté de l'habillage du plafond, d'un évidement de l'habillage du plafond (11) en forme de trou de serrure, auquel se raccorde une région de fente (30) en forme de rainure plus étroite que la tête de boulon (28) et de dimensions adaptées approximativement à la tige de boulon (27) de sorte qu'ensuite le boulon (12) avec sa tige de boulon (27), de préférence avec une fermeture par serrage et/ou avec une fermeture par engagement positif, puisse être enfoncé depuis le logement de boulon (29) dans région de fente (30) et que la tête de boulon (28) vienne en prise par l'arrière dans la région de fente dans sa position finale de déplacement avec l'évidement de l'habillage du plafond (11).

5. Dispositif d'alimentation en air selon la revendication 4, **caractérisé en ce que** dans la région du boulon (12) est en outre prévu au moins un ergot de fixation (32) qui peut être introduit de préférence de manière desserrable après un transfert du boulon (12) dans sa position finale de déplacement dans la région d'évidement de l'habillage du plafond, de préférence dans la région du logement de boulon (29), de préférence par insertion et/ou pivotement de telle sorte que l'ergot de fixation (32), en coopérant avec un élément conjugué du côté de l'évidement de l'habillage du plafond, de préférence une région de bord d'ouverture, bloque un déplacement du boulon (12) et donc du canal de guidage d'air (2).

6. Dispositif d'alimentation en air selon la revendication 4 ou 5, **caractérisé en ce que** la connexion par enfichage et par coulissement est réalisée sur le canal de guidage d'air (2) dans la région de l'élément de raccordement de canal de guidage d'air (3).

7. Dispositif d'alimentation en air selon l'une quelconque des revendications 4 à 6, **caractérisé en ce que** la connexion par enfichage et par coulissement est prévue au niveau d'une région de la paroi extérieure du canal de guidage d'air (2) qui est espacée de l'au moins un élément de raccordement de canal de guidage d'air (3).

8. Dispositif d'alimentation en air selon l'une quelconque des revendications 3 à 7, **caractérisé en ce que** le canal de guidage d'air (2), après la fabrication de la connexion rapide à l'habillage du plafond (6), peut être fixé au moyen d'au moins un élément de fixation (18) à l'habillage du plafond (6), de préférence dans la région d'une extrémité du canal de guidage d'air libre opposée à la source de ventilation (8).

9. Dispositif d'alimentation en air selon la revendication 2 et selon l'une quelconque des revendications 3 à 8, **caractérisé en ce qu'**un joint d'étanchéité (33) annulaire guidé tout autour de l'élément de raccordement de canal de guidage d'air (3) est prévu, lequel s'applique de manière pressée hermétiquement dans l'état monté d'une part contre une région de bord de l'ouverture de logement du côté inférieur de l'habillage de plafond et d'autre part contre une région de canal de guidage d'air associée de manière correspondante, de préférence une région de paroi extérieure du canal de guidage d'air (2).

10. Dispositif d'alimentation en air selon la revendication 2 et selon l'une quelconque des revendications 3 à 9, **caractérisé en ce que** l'au moins un élément de raccordement de canal de guidage d'air (3) est réalisé par un raccord qui présente de préférence une section transversale rectangulaire.

11. Dispositif d'alimentation en air selon l'une quelconque des revendications 1 à 10, **caractérisé en ce que** le canal de guidage d'air (2) s'étend dans l'état monté dans l'habitacle du véhicule (7) sur le côté inférieur de l'habillage du plafond du côté du bord dans la région proche du longeron du toit (14) dans la direction longitudinale du véhicule, de préférence dans la région arrière du véhicule.

12. Dispositif d'alimentation en air selon la revendication 11, **caractérisé en ce que** le canal de guidage d'air (2) s'étend de préférence dans la région arrière du véhicule d'un véhicule break ou utilitaire, jusqu'à environ la région d'une colonne verticale, de préférence une colonne D (16), et est accouplé à une source de ventilation (8) s'y trouvant, de préférence une soufflante, notamment au moyen d'au moins un élément de canal d'air (9 ; 9') s'étendant le long de la colonne verticale (16) et/ou d'une région d'extrémité de longeron de toit dans la direction longitudinale du véhicule.

13. Dispositif d'alimentation en air selon la revendication 12, **caractérisé en ce que** l'élément de canal d'air (9 ; 9') reliant la source de ventilation (8) au canal de guidage d'air (2) peut être encliqueté au niveau de la colonne D (16) au moyen d'au moins une connexion par encliquetage et/ou par coulissement et/ou par enfichage en tant que connexion rapide, de préférence des formations en plastique (21) sur l'élément de canal d'air (9 ; 9') venant en prise par l'arrière au moyen d'évidements (22) dans la colonne (16).

14. Dispositif d'alimentation en air selon l'une quelconque des revendications 1 à 13, **caractérisé en ce que** l'au moins un canal de distribution d'air (4) disposé du côté supérieur de l'habillage du plafond s'étend sur l'habillage du plafond (6) entre des côtés opposés du véhicule dans la direction transversale du véhicule, de préférence dans une région du toit du véhicule non renforcée.

15. Dispositif d'alimentation en air selon la revendication 2 et selon l'une quelconque des revendications 3 à 14, **caractérisé en ce que** l'on prévoit sur le côté supérieur de l'habillage du plafond au moins deux canaux de distribution d'air (4) qui sont orientés de manière espacée l'un de l'autre et approximativement parallèlement l'un à l'autre et qui s'étendent dans la direction transversale du véhicule entre des côtés opposés du véhicule du côté supérieur de l'habillage du plafond, et
**en ce que** chacun de ces canaux de distribution d'air séparés (4) est connecté fluidiquement au canal de guidage d'air (2) au moyen d'un élément de raccordement de canal de guidage d'air (3) séparé.

16. Dispositif d'alimentation en air selon l'une quelconque des revendications 1 à 15, **caractérisé en ce que** le canal de distribution d'air (4) présente en section transversale un profil ouvert vers le bas, de préférence en forme de U et/ou en forme de chapeau, avec des brides de fixation (20) au niveau des extrémités libres de telle sorte que la région recouverte du côté supérieur de l'habillage du plafond fasse partie du guidage d'air du côté supérieur.

17. Dispositif d'alimentation en air selon l'une quelconque des revendications 1 à 16, **caractérisé en ce que** l'au moins un canal de distribution d'air (4) est connecté au côté supérieur de l'habillage du plafond par collage et/ou fusion et/ou adhésion et/ou soudage.

18. Dispositif d'alimentation en air selon l'une quelconque des revendications 1 à 17, **caractérisé en ce que** l'au moins un canal de distribution d'air (4) est fabriqué à partir d'un matériau flexible en carton et/ou en carte et/ou en fibre de bois et/ou en plastique, de préférence une mousse de plastique, de préférence une mousse de polyéthylène.

19. Dispositif d'alimentation en air selon l'une quelconque des revendications 1 à 18, **caractérisé en ce que** le canal de guidage d'air (4) avec éventuellement des éléments de canal d'air accouplés (9 ; 9'), pour le raccordement à une source de ventilation (8), est fabriqué d'une seule pièce sous forme de pièce soufflée en plastique, de préférence sous forme de pièce soufflée en plastique grainé, de préférence en polypropylène.

20. Dispositif d'alimentation en air selon l'une quelconque des revendications 1 à 19, **caractérisé en ce que** l'habillage du plafond (6) est réalisé sous forme de plaque flexible, plane et de préférence ayant des dimensions stables, de préférence en un matériau en plastique et/ou en carton et/ou en carte et/ou en fibre de bois.

21. Dispositif d'alimentation en air selon la revendication 20, **caractérisé en ce que** les évidements (10 ; 11 ; 17) pour des pièces fonctionnelles et/ou rapportées sont estampées dans l'habillage du plafond (6).

22. Dispositif d'alimentation en air selon la revendication 20 ou 21, **caractérisé en ce que** l'habillage du plafond (6), de préférence la partie de l'habillage du plafond prévue pour la région arrière, est réalisé(e) en plusieurs parties.
